# EUROPEAN PATENT SPECIFICATION

(11) **EP 4 632 040 B1**
(45) Date of publication and mention of the grant of the patent: **09.12.2026**
(21) Application number: 23822411.7
(22) Date of filing: 06.11.2023
(51) Int. Cl.: C09K 21/12, C07H 1/00

(54) **POLYELECTROLYTE COMPLEX MADE OF CHITOSAN AND PHYTIC ACID, PRODUCTION METHOD AND USE THEREOF**
POLYELEKTROLYTKOMPLEX AUS CHITOSAN UND PHYTINSÄURE, HERSTELLUNGSVERFAHREN UND VERWENDUNG DAVON
COMPLEXE POLYÉLECTROLYTIQUE DE CHITOSANE ET D'ACIDE PHYTIQUE, PROCÉDÉ D'OBTENTION ET D'UTILISATION DE CELUI-CI

(30) Priority: 07.12.2022 ES 202231055
(43) Date of publication of application: 15.10.2025
(73) Proprietor: AIMPLAS - Asociación de Investigación de Materiales Plásticos y Conexas, 46980 Paterna (Valencia) (ES)
(72) Inventor: GALINDO-GALIANA, Begoña, 46980 Paterna (Valencia) (ES); VALERA-GÓMEZ, Miguel Ángel, 46980 Paterna (Valencia) (ES); AGOSTINIS, Lodovico, 46980 Paterna (Valencia) (ES); MANGAS-ROCA, Ana, 46980 Paterna (Valencia) (ES); FERNÁNDEZ-BAZÁN, Mireia, 46980 Paterna (Valencia) (ES)
(74) Representative: Pons IP
(86) International application number: PCT/ES2023/070653
(87) International publication number: WO 2024/121444

(56) References cited:
- ZHANG ZHIHAO ET AL: "A facile and green strategy to simultaneously enhance the flame retardant and mechanical properties of poly(vinyl alcohol) by introduction of a bio-based polyelectrolyte complex formed by chitosan and phytic acid", DALTON TRANSACTIONS, vol. 49, no. 32, 18 August 2020 (2020-08-18), Cambridge, pages 11226 - 11237, XP093119439, ISSN: 1477-9226, Retrieved from the Internet <URL:https://pubs.rsc.org/en/content/articlepdf/2020/dt/d0dt02019b> DOI: 10.1039/D0DT02019B
- SHEIKH JAVED ET AL: "Multifunctional modification of linen fabric using chitosan-based formulations", INTERNATIONAL JOURNAL OF BIOLOGICAL MACROMOLECULES, ELSEVIER BV, NL, vol. 118, 30 June 2018 (2018-06-30), pages 896 - 902, XP085440519, ISSN: 0141-8130, DOI: 10.1016/J.IJBIOMAC.2018.06.150

## Description

The present invention relates to a polyelectrolyte complex comprising chitosan and phytic acid or its derivatives, the method for producing said polyelectrolyte complex through mechanochemical synthesis and its use as a fireproof, antimicrobial and antioxidant additive in thermoset and thermoplastic polymers. Furthermore, the present invention relates to a material comprising said polyelectrolyte complex and an epoxy resin, an article coated with said flame retardant and an article having said flame retardant embedded therein.

Therefore, the present invention is framed within the fireproof plastics industry with high demands for flame resistance or anti-fire, such as the automotive industry, aeronautics, construction or the electrical-electronic sector.

### BACKGROUND OF THE INVENTION

The replacement of metal parts with plastic materials has contributed to the growth in demand for fireproof plastics in sectors with high anti-fire requirements such as automotive, aeronautics, construction or the electrical-electronic sector. Furthermore, the standards that regulate halogenated retardants have forced their replacement and therefore the search for solutions for specific applications and plastics that manage to optimise the performance of a product against fire.

Fire resistance is a very important property that must be taken into account when selecting the appropriate material for an application. Polymeric composites are used in the construction and mobility sectors due to their lightness and mechanical properties. However, their high flammability requires the introduction of flame retardant additives. The most effective flame retardants were based on halogenated compounds. Due to reasons of smoke toxicity, most of these additives are being banned. Phosphorus, nitrogen and inorganic compounds are the halogen-free alternative. However, there is no commercial solution based on raw materials of renewable origin. Materials of biological origin are of interest in all industries to reduce their environmental impact. Huge research activity has been carried out to develop and scale up the production of biopolymers. Biopolymers need additives from renewable resources to be in line with the principles of Green Chemistry and European Climate Action policies. But it could also be interesting for conventional petroleum-based polymers as an alternative to flame retardant additives of fossil origin. The lack of phosphate rock in European territory makes the development of alternative flame retardants to increase market competitiveness even more interesting. Recent research activity related to the use of alternative flame retardant additives from renewable resources demonstrates the great interest in the topic.

Biological molecules from extractive resources can be used as raw materials for polymers. Four main groups of biomolecules have been identified as possible candidates for fireproof additives (Villamil Watson, D.A.; Schiraldi, D.A. *Polymers* 2020, 12, 849.): carbohydrates, proteins, lipids and phenolic compounds. To evaluate how natural compounds can interact with the polymer in the presence of fire, it is important to analyse the polymer combustion cycle.

An intumescent system creates an expanded foam when heated. This foam is a protective layer that insulates the polymer or fuel from the flame. Intumescence involves different aspects, such as carbon viscoelasticity, carbon formation and heat and mass transfer. Therefore, rheological, chemical and physical processes intervene in the intumescence process.

As an alternative to the flame retardants known in the state of the art, the present invention proposes a non-toxic complex, obtained from accessible raw materials such as biopolymers and which has optimal fireproof properties. Likewise, the present invention, driven by the global awareness of finding more sustainable solutions, proposes a synthesis method of said polyelectrolyte complex that is environmentally friendly and has advantages over traditional methods (Zhang, T. et al. Industrial & Engineering Chemistry Research 2014, 53, 19199-19207.), which requires large consumption of solvents, time and more reaction steps. Zhang Zhihao et al. (Dalton transitions 2020, 49, 32, 18, 11226-11237) also disclose a poly(vinyl alcohol) with flame retardant properties comprising a bio-based polyelectrolyte complex formed by chitosan (powder, MW 50-190 kDa, 80-95% deacetylated, BR) and phytic acid; wherein V-0 UL-94 rating is achieved when the phosphor content is more than 4% and the ratio of amino groups to phosphate groups is less than 2:1; thus a molar ratio between the beta-(1-4)-D-glucosamine monomer and phytic acid less than 12:1. For example the ratio of amino groups to phosphate groups is 2:1 and the phosphor content 11.27%.

### DESCRIPTION OF THE INVENTION

In a first aspect, the present invention relates to a polyelectrolyte complex (hereinafter the polyelectrolyte complex of the invention or PEC) characterised in that it comprises
- chitosan,
- phytic acid or derived salts thereof (in other words, in its protonated or fully or partially deprotonated form),
- water in an amount between 5% and 15% by weight,

wherein chitosan and phytic acid are bound by means of electrostatic forces, and
wherein said polyelectrolyte complex is a powdery solid.

Water is forming hydrogen bonds with the -OH present in the polyelectrolyte complex. Water can be found inside the structure of the polyelectrolyte complex or adsorbed on its surface.

In a preferred embodiment, the polyelectrolyte complex consists of the three aforementioned components: chitosan, phytic acid or derived salts thereof and water.

In a preferred embodiment, the complex of the present invention is amorphous, or semicrystalline.

Chitosan is a polysaccharide of natural origin that is extracted from natural resources such as crustaceans, fungi or insects. As a biopolymer, it can occur with a molecular weight between 0.5 KDA and 1500 KDa, being made up of monomeric glucosamide units, also called N-acetyl-D-glucosamine (monomer of formula I or acetylated unit) and β-(1-4)-D-glucosamine (monomer of formula II or deacetylated unit or, in a simplified manner, glucosamine). The ratio between monomers I and II is considered to be a minimum of 50:50 to a maximum of 0.01:99.99. Due to the large number of hydroxyl and nitrogen groups, it is a good carbonising agent, releases inert gases during its combustion, and also acts as a foaming agent.

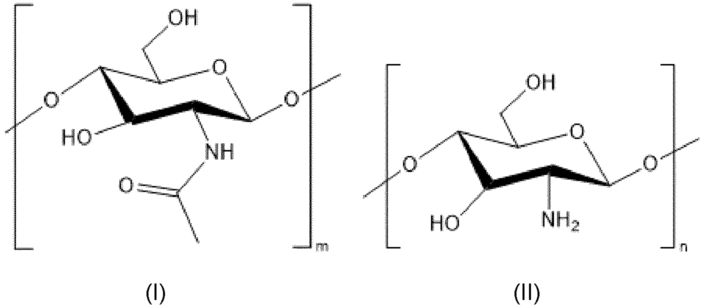

In a preferred embodiment, the chitosan present in the polyelectrolyte complex of the invention has a molecular weight between 90 and 150 KDa.

In another preferred embodiment, the chitosan used has a degree of deacetylation (DDA) of between 50-99%, more preferably between 75-90% and, even more preferably, of 85%.

The degree of deacetylation (DDA) indicates the percentage of monomeric units of β-(1-4)-D-glucosamine (monomer of formula II) with respect to the total monomers in chitosan.

Phytic acid is an organic acid that contains phosphorus, present in plants, especially in seeds and fibre and presents formula (III). High phosphorus content means that phytic acid can act as a fireproof additive in polymer composite materials. Phytic acid can be in the form of a salt (phytate) in which case the phosphate groups will be totally or partially deprotonated and the negative charge or charges are compensated with cations, such as, for example, Na, K, NH₄, Ca, Fe and Al derived cations.

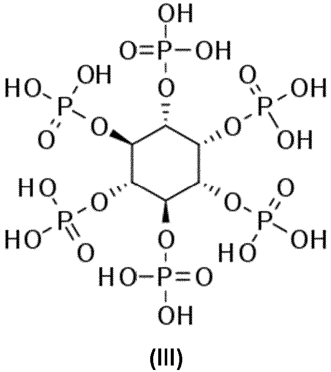

The polyelectrolyte complex of the invention has a molar ratio between the monomer (II) and the phytic acid or derived salts thereof between 4:1 to 6.5:1, preferably 6:1.

The molar ratio between the phosphorus atoms from the compound (III), and the nitrogen atoms from the monomeric unit of the monomer (II) in chitosan, referred to hereinafter as the P:N ratio of the polyelectrolyte complex of the invention preferably ranges between a range of 1:1 and 3:1, more preferably between 1.1:1 and 1.5:1, with preference for a ratio of 1.5:1.

The percentage by weight of phosphorus in the polyelectrolyte complex is between 8 and 15%, more preferably between 11 and 15% and, even more preferably 13%.

The polyelectrolyte complex of the invention has a brown colour that can vary from light beige to dark brown depending on the molecular size of the chitosan, its source, the residence time in the reactor for its synthesis, etc.

Preferably, the polyelectrolyte complex of the invention is in powdery form and preferably has a grain size (diameter or largest dimension) between 5 µm and 500 µm, preferably 125 µm, measured by laser diffraction.

The polyelectrolyte complex of the invention is formed by electrostatic interactions between phytic acid and chitosan. In particular, these interactions occur between the phosphate groups of phytic acid and the amino groups (-NH₂) of the glucosamine present in chitosan, so that the amino group is protonated forming an ammonium group (-NH₃⁺) that binds to the negatively charged deprotonated phosphate group.

Next, the formula of a preferred embodiment of the polyelectrolyte complex of the invention is shown in the case of a chitosan: phytic acid 6:1 molar ratio (where X = H):

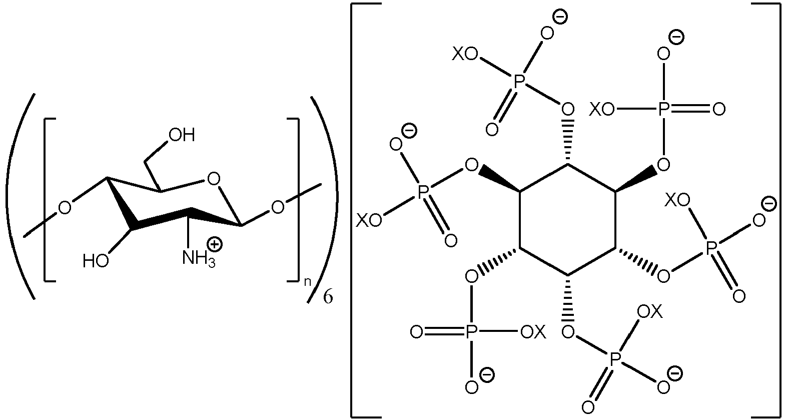

Among the advantages of the complex of the invention are its high phosphorus (P) content, which makes it highly efficient as a flame retardant; it also has the advantage of containing easily accessible and non-toxic biopolymers. It exhibits fireproof properties, especially combined with other fireproof additives with which it produces a synergistic effect.

Furthermore, the present invention relates to the method for obtaining said polyelectrolyte complex by mechanochemical synthesis. It is a mechanochemical reaction, in other words, a chemical reaction that is induced by the action of mechanical energy provided to the system.

Therefore, another aspect of the invention relates to a process for obtaining the polyelectrolyte complex of the present invention (hereinafter the process of the invention) characterised in that it comprises or consists of the following steps:
a) introducing chitosan powder into a twin-screw extruder using a temperature profile of between 25 °C and 120 °C and maintaining a screw rotation speed between 50 rpm and 500 rpm.
b) adding an aqueous solution of phytic acid, or a salt thereof, having a concentration of phytic acid between 25% and 70% by weight, after the introduction of chitosan, using a liquid injection device, where it is mixed and reacted with chitosan along the length of the extruder, maintaining the same temperature and speed mentioned in section a), during a residence time of between 30 and 120 s, the polyelectrolyte complex formed as a powdery solid being collected at the outlet of the extruder.

In a preferred embodiment, the twin-screw extruder used is a co-rotating extruder.

In another preferred embodiment, the rotation speed used is between 75 and 250 rpm and, more preferably of 150rpm.

In a preferred embodiment, the chitosan used has a molecular weight between 90 and 150 KDa and/or a degree of deacetylation between 60-90%, more preferably between 75-90% and, even more preferably, of 85%.

In a preferred embodiment, the total amount fed to the extruder is between 1 and 15kg/h, more preferably between 2 and 8 kg/h, being a continuous process.

In a preferred embodiment, the molar ratio being used between the monomer (II) and the phytic acid or derived salts thereof is between 4:1 to 6.5:1, where preferably a 6:1 molar ratio is used.

In a more preferred embodiment, the temperature at which chitosan is introduced and the reaction is maintained is 100 °C.

The present invention also relates to the polyelectrolyte complex obtained by means of the method described above.

The method of the present invention provides the following advantages:
- Ecological safety: Work operations exclude the use of solvents, minimising their vapour emissions into the work environment, and therefore the potential for chemical accidents such as spills or explosions during the production of the final product.
- Reduction in the use of auxiliary substances: for the synthesis of the polyelectrolyte complex, the use of a solvent medium is not required, since the reaction is mechanochemical, in other words, it is induced by the contribution of mechanical energy to the system. It is an advantage over conventional synthesis methods in which large amounts of acidic or basic solvents are required.
- Reduction of energy consumption: The present invention does not require the energy costs of conventional synthesis processes associated with the evaporation and recovery of the solvent.
- Reduction of reaction times: the method is very fast, reducing the hours-long residence time in conventional synthesis to 0.5 - 2 minutes in the mechanochemical process.

The polyelectrolyte complex of the present invention can be used as a bio-fireproof additive (fireproof additive obtained from renewable sources) or as part of the composition of flame retardants in thermoplastic and thermoset polymeric materials, preferably in epoxy resins. Likewise, it can be used as an antimicrobial and antioxidant additive in said materials, since chitosan has antibacterial properties, and both chitosan and phytic acid have antioxidant properties.

Therefore, another aspect of the present invention relates to the use of the polyelectrolyte complex of the invention as a bio-fireproof or flame retardant additive, as antimicrobial and/or as antioxidant in polymeric compositions, preferably compositions comprising thermoset or thermoplastic polymers and, more preferably, in compositions comprising epoxy resins as a polymer matrix.

In a preferred embodiment, the polyelectrolyte complex is used in the composition in a proportion between 1 and 5% by weight for use as an antibacterial or antioxidant.

In another preferred embodiment, the polyelectrolyte complex of the present invention is used in the composition in a proportion between 10 and 33% by weight of the total as a fireproof additive.

In a preferred embodiment, the polyelectrolyte complex of the present invention is used as a fireproof additive in a composition together with fireproof materials based on ammonium polyphosphate, the proportion by weight of the polyelectrolyte complex plus that of the ammonium polyphosphate being in this case between 10 and 33%. Preferably, the weight ratio between ammonium polyphosphate and the polyelectrolyte complex of the present invention is between 0.5:1-5:1, more preferably 2:1.

Another aspect of the present invention relates to an article made of a polymeric material, preferably of a thermoset or thermoplastic polymer and, even more preferably, of an epoxy resin comprising the polyelectrolyte complex of the present invention, either in the form of a coating or embedded in the same article.

In a preferred embodiment, the polyelectrolyte complex of the present invention is found in the article in a proportion between 1 and 33% by weight.

In a preferred embodiment, the polyelectrolyte complex of the present invention is found in the article in a proportion between 1 and 5% by weight. This proportion is mainly used when the polyelectrolyte complex is used as an antibacterial or antioxidant additive.

In another preferred embodiment, the polyelectrolyte complex of the present invention is found in the article in a proportion between 10 and 33% by weight. This proportion is mainly used when the complex is used as a fireproof or flame retardant additive.

In a preferred embodiment, the article further comprises a conventional fireproof additive such as, for example, ammonium polyphosphate. Preferably, the sum of the polyelectrolyte complex of the present invention and the other fireproof additive, preferably ammonium polyphosphate, is between 1 and 33% by weight with respect to the article, more preferably between 10% and 33%. The proportion by weight between the fireproof additive, preferably ammonium polyphosphate, and the complex of the present invention is between 0.5:1-5:1, more preferably 2:1.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Figure 1** Evolution of the mechanochemical reaction in a torque rheometer according to assay 1 (monomer (II): phytic acid (III) molar ratio of 6:1).
**Figure 2** FTIR spectra: (A) Chitosan, (B) PEC obtained by the mechanochemical method (according to assay 1 of the present invention), (C) PEC obtained by conventional synthesis (defined in assay 3).
**Figure 3** X-ray diffractogram of chitosan (CS) and PEC obtained by mechanochemistry according to assay 2.1 (monomer (II):phytic acid (III) molar ratio of 6:1, 2 kg/h, 200 rpm).
**Figure 4** X-ray diffractogram of chitosan (CS) and PEC obtained by mechanochemistry according to assay 2.2 (monomer (II):phytic acid (III) molar ratio of 6:1, 4 kg/h, 150 rpm).
**Figure 5** X-ray diffractogram of chitosan (CS) and PEC obtained by mechanochemistry according to assay 2.3 (monomer (II):phytic acid (III) molar ratio of 6:1, 6 kg/h, 150 rpm).

### EXAMPLES

Next, the invention will be illustrated by means of assays carried out by the inventors that demonstrate the effectiveness of the product of the invention.

### Assay 1: Preliminary preparation study of the polyelectrolyte complex of the invention using a mechanochemical method

First of all and, prior to carrying out the method on a larger scale and continuously, the inventors carried out a reactivity study of chitosan and phytic acid using a mechanochemical method, using a Brabender^{®} Plasti-Corder^{®} Lab-Station torque rheometer (internal batch or load-operated mixer), where the reaction is caused through the mechanical energy provided to the system by the rotation of the kneading screws or blades that are inside the mixing chamber (100 rpm), and by the temperature established in the system (100 °C). The mixing chamber is connected to a torque rheometer, which allows monitoring the evolution of the torque and temperature of the product throughout the assay time (plastogram). The torque value reflects the resistance of the mixture as opposed to the rotational movement of the blades during the process, allowing the progress of the reaction to be followed in real time, registering an increase in torque and temperature during the formation reaction of the polyelectrolyte complex up to a maximum, point at which the reaction is finished.

The samples prepared in the torque rheometer are shown in Table 1:

**Table 1: Samples prepared in the torque rheometer**

| | **Molar ratio** | |
|---|---|---|
| **sample** | **Monomer (II)** | **Compound (III) (phytic acid)** |
| **BIO 61A** | 6 | 1 |
| **BIO 61B** | 5 | 1 |
| **BIO 61C** | 4 | 1 |

The chitosan used was supplied by Aura Biotechnologies private Limited (India), having a molecular weight between 90-150 KDa, and a degree of deacetylation (DDA) of 85%, in other words, 85 molar % of the compound corresponding to formula (II).

The phytic acid was supplied by HANGZHOU LIANZHENG CHEMICAL CO. LTD. As an aqueous solution with 70% by weight of phytic acid.

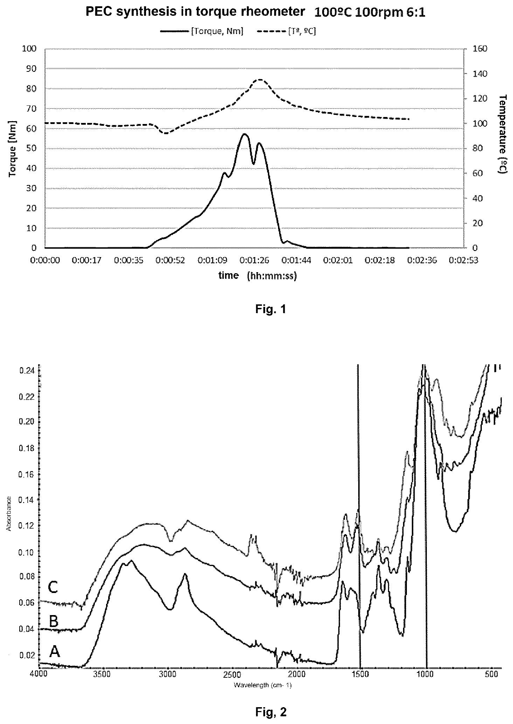

After homogenising the premix of the components, said premix was added inside the chamber of the torque rheometer with the help of a blade. After 1 minute from the addition, a torque and temperature peak occurred (due to the exothermic reaction of PEC formation). The graph (Figure 1) shows the plastogram obtained (evolution of the torque and the actual temperature of the mixture inside the mixing chamber over time).

The area under the torque versus time curve indicates the mechanical energy absorbed by the system during the reaction, registering an increase in torque and therefore energy absorption during the reaction. Once the reaction is finished, the torque decreases while the particle size of the polyelectrolyte complex obtained is reduced due to the action of the screws.

The appearance of the final product obtained with the Brabender^{®} Plasti-Corder^{®} Lab-Station heated type mixer differs from that of the premix reagents, having a darker colour than the starting chitosan and a greater roughness and particle size, both in colour and roughness. When the chitosan containing the monomer (II), and the phytic acid react, a considerable increase in volume occurs as the reaction takes place. Said increase in volume causes greater resistance to the rheometer and therefore an increase in friction and motor torque. Once it has reacted, the volume stops increasing, the product is dehydrated and ground inside the rheometer while mixing continues.

The FTIR characterisation of the products obtained was carried out (The spectra in the mid-infrared region (4000-400 cm⁻¹) were recorded with a Nicolet 6700 S/N AHR071021 FT-IR spectrophotometer by smart orbit reflection with diamond crystal). By way of example, Figure 2 compares the infrared spectrum of chitosan, compared to the polyelectrolytic complexes obtained by mechanochemistry and conventional synthesis (with monomer (II): phytic acid (III) molar ratio 6:1). Said figure identifies the most characteristic bands of the spectra for each of the functional groups of the polyelectrolyte complex, among which the following stand out:
- The appearance of the band at 1539cm⁻¹ corresponding to the vibration mode characteristic of the group *NH*₃⁺
- The presence of the band corresponding to the stretching vibration of the group *PO*₃²⁻ associated with the group *NH*₃⁺, located at 1067 cm⁻¹, and which show the ionic interaction between both groups and consequently the formation of the polyelectrolyte complex (Zhang, T. *et al. Industrial & Engineering Chemistry Research* **2014**, *53*, 19199-19207; Lawrie, G. *et al.* Biomacromolecules 2007, 8, 2533-2541).

After carrying out this example, the inventors verified that by means of the mechanochemical method the desired polyelectrolyte complex can be synthesised in a residence time of less than three minutes (preferably less than 1 min), presenting the same characteristic bands in the FTIR spectrum. For this reason, it was decided to scale the method and take it to a continuous mechanochemical process in a twin-screw extruder as detailed in example 2.

### Assay 2: Preparation of the chitosan-phytic acid polyelectrolyte complex following the mechanochemical method of the present invention (in a twin-screw extruder)

The extruder (LEISTRITZ 27 MAXX) according to the present invention works continuously, with a twin screw design and features a conveying section which is specially provided before the high shearing section, so that the chitosan powder is conveyed to the area where the phytic acid is incorporated, moment at which the reaction begins. The subsequent high shear section favours mixing and interaction between the reactants, promoting the mechanochemical reaction. Accordingly, the lengths of the feed section, the conveyance section and the shearing section can optionally be determined taking into account the feed rates of the reactants. However, according to the present invention, the provision of the alternation of these two sections along the extruder makes it possible to carry out the mechanochemical reaction at different process conditions; screw rotation speed (75 - 200 rpm) and production (2 - 8 kg/h).

The preparation of various formulations of the polyelectrolyte complex in the twin-screw extruder using the reagents mentioned in example 1, and according to the method of the present invention, is detailed below:
2.1) A formulation was prepared by feeding the extruder a total mass flow rate (chitosan and phytic acid solution) of 2 kg/h, maintaining a monomer (II): phytic acid (III) molar ratio of 6:1, using a screw rotation speed of 200 rpm and a temperature profile between 25 and 100 °C. Under these process conditions the average residence time of the material inside the extruder was estimated at 80 s. The PEC obtained had a dark beige colour powdery appearance.
2.2) Another formulation was prepared by feeding the extruder a total mass flow rate (chitosan and phytic acid solution) of 4kg/h, maintaining a monomer (II): phytic acid (III) molar ratio of 6:1, using a screw rotation speed of 150 rpm and a temperature profile between 25 and 100 °C. Under these process conditions the average residence time of the material inside the extruder was estimated at 60 s. The PEC obtained had a light beige colour powdery appearance.
2.3) Another formulation was prepared by feeding the extruder a total mass flow rate (chitosan and phytic acid solution) of 6kg/h, maintaining a monomer (II): phytic acid (III) molar ratio of 6:1, using a screw rotation speed of 150 rpm and a temperature profile between 25 and 100 °C. Under these process conditions the average residence time of the material inside the extruder was estimated at 50 s. The PEC obtained had a light beige colour powdery appearance.

The materials obtained at the outlet of the extruder in each example are characterised by X-ray diffraction and elemental analysis.

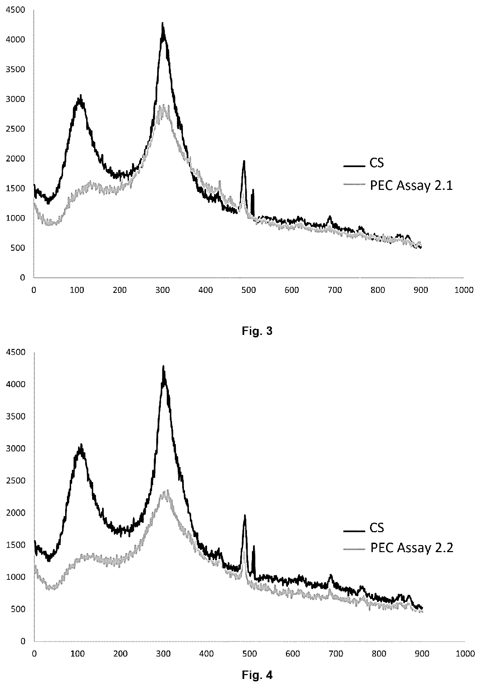

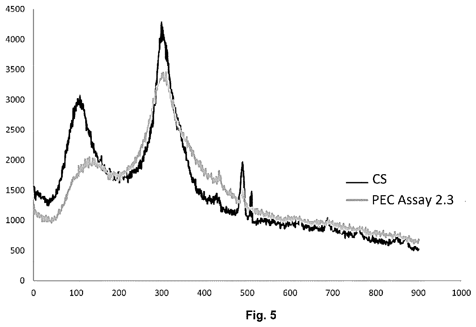

The characterisation by X-ray diffraction of the polyelectrolyte complex samples obtained in assays 2.1, 2.2 and 2.3, was carried out on a BRUKER D2 PHASER equipment. Measurements were recorded using Cu-Ka radiation (I = 1.54 Å) in a 2θ angle range between 5° and 60° carrying out a 5 second acquisition and a step of 0.05°. The corresponding diffractograms are shown in figures 3, 4 and 5.

The ionic interaction between the amino groups of the monomer (II) and the phosphate groups of phytic acid (III) is evidenced by an increase in the degree of amorphisation of chitosan when phytic acid is introduced into its structure. The X-ray diffractogram of chitosan indicates that it is a semicrystalline polymer with typical peaks around 10° and 20°, the position and shape of which coincides with those published in the literature (Zhang, T. et al. Industrial & Engineering Chemistry Research 2014, 53, 19199-19207). Chitosan is organised into amorphous regions that coexist with crystalline regions, and that are reduced after the formation of the PEC. The X-ray diffractograms corresponding to assays 2.1, 2.2 and 2.3 (figures 3 - 5) show a significant reduction in the intensity of the peak located at 10°, and a smaller reduction in the intensity of the peak at 20°, which translates into a decrease in the degree of crystallinity in the PEC with respect to the starting chitosan. These results are attributed to the ionic interaction between the monomer (II) and phytic acid (III). When such interaction takes place, the monomer (II) NH₃⁺ groups form complexes with the phytic acid (III) O=P-O⁻ groups, which causes the breaking of hydrogen bonds between the -NH groups₂ and -OH present in chitosan and, therefore, result in a much more amorphous structure than that described in the literature (Zhang, T. et al. Industrial & Engineering Chemistry Research 2014, 53, 19199-19207; Nam, S.Y., et al. Journal of membrane science 1997, 135, 161-171).

Elemental analysis (EA), also known as organic elemental analysis, determines the amounts of carbon (C), phosphorus (P), hydrogen (H), nitrogen (N) and sulphur (S) present in a sample. This technique was used to determine the nitrogen content, present in compounds (I) and (II), and the phosphorus (P) content, present in compound (III), of the polyelectrolyte complex, allowing to establish molar ratios between the different atoms. For this, a Fisons EA1108 elemental analyser, which uses sulphanilamide as standard, was used. The combustion of the samples was carried out at 1100 °C and under pure oxygen. The gases produced are separated by a chromatographic column and are measured by a thermal conductivity detector (TCD). In this manner, quantification of C, N and P content in the initial sample is enabled.

Table 2 shows the elemental analysis of the samples obtained according to examples 2.1, 2.2 and 2.3.

**Table 2: Elemental analysis of the samples obtained by mechanochemistry (The proportions of C, P and N by weight (%) are from the total complex sample, wherein the N comes from both the N of glucosamine and the glucosamide of chitosan, while to calculate the P:N molar ratio, only the nitrogen from the glucosamine (II) monomer according to the DDA deacetylation degree of 85% has been taken into account.**

| Assay | Experimental conditions | P (% by weight) | Total N (% by weight) | C (% by weight) | P:N molar ratio, wherein the N comes from the monomer (II) |
|---|---|---|---|---|---|
| 2.1 | PEC 2kg/h, 200 rpm | 11.8 | 4.9 | 32 | 1.28 |
| 2.2 | PEC 4kg/h, 150 rpm | 13.3 | 4.8 | 31 | 1.47 |
| 2.3 | PEC 6kg/h, 150 rpm | 11.5 | 5.1 | 33 | 1.20 |

By means of the mechanochemical method according to the present invention, polyelectrolyte complexes with a phosphorus content greater than 11% by weight and a P:N ratio between 1.20 and 1.47 were obtained, wherein N is the nitrogen from the glucosamine monomer (II).

### Example 3: Comparative assay of the method of the present invention against conventional synthesis

The conventional synthesis of the polyelectrolyte complex was carried out according to the previously described method by Zhang (Zhang, T. et al. Industrial & Engineering Chemistry Research 2014, 53, 19199-19207), maintaining the monomer (II): phytic acid (III) molar ratio of 6:1. The synthesis was carried out using the same amount of chitosan as in the previous examples and sodium phytate (purity 85% by weight, supplied by BIOSYNTH GROUP), on a 50 L scale.

3000 g of chitosan are introduced into a 50 L stirred reactor and 7.85 L of water is added. To promote the solubility of chitosan in water, the medium is acidified to pH 1 by adding 15 L of a 0.5 M acetic acid solution prepared in advance. The addition is carried out drop by drop under constant stirring, maintaining for 1 h until the chitosan is completely dissolved. On the other hand, a solution of sodium phytate is prepared (3300 g of sodium phytate in 24.75 L of water). Said solution is added drop by drop to the reactor, carrying out the reaction for one hour with continuous stirring. Once that time has elapsed, the reactor is opened and the PEC obtained is recovered in the form of fibres, which is subsequently washed with distilled water, vacuumed filtered and dried in a convection oven at 50 °C until constant weight. Once the recovered PEC is dry, it is micronised with a mesh size of 80 µm. The entire conventional PEC synthesis process takes at least 24 h, yielding a quantity of 3kg of dry PEC.

The polyelectrolyte complex obtained by conventional synthesis was characterised by elemental analysis following the method previously described in the present invention. Table 3 shows the elemental analysis of the polyelectrolyte complex obtained by conventional synthesis.

Table 3 shows an elemental analysis obtained by conventional synthesis, according to example 3 (The proportions of C, P and N by weight (%) are from the total complex sample, wherein the N comes from both the N of glucosamine and the glucosamide of chitosan, while to calculate the P:N molar ratio, only the nitrogen from the glucosamine (II) monomer according to the DDA deacetylation degree of 85% has been taken into account.

| Example | Experimental conditions (conventional method) | P (% by weight) | Total N (% by weight) | C (% by weight) | P:N molar ratio, wherein the N comes from the monomer (II) |
|---|---|---|---|---|---|
| 3 | PEC 2kg/h, 200 rpm | 7.27 | 3.89 | 25.58 | 0.99 |

Through this method, a polyelectrolyte complex is obtained with a phosphorus content of 7.27% by weight, and P:N ratio of 0.99. It should be noted that the phosphorus content and P:N ratio obtained by conventional synthesis are lower than those which are obtained by the mechanochemical process according to the present invention.

### Assay 4: Study of the fire behaviour of an epoxy resin comprising the polyelectrolyte complex of the present invention

To analyse the fire behaviour of articles comprising the PEC of the present invention and epoxy resins, the samples specified in Table 4 were prepared using the polyelectrolyte complex of the present invention obtained by mechanochemistry according to assay 2.2, the PEC obtained by conventional synthesis, a bio-epoxy resin (Resoltech 1800 ECO supplied by Resoltech) as a polymer matrix, a hardening additive (Hardener Resoltech 1804 ECO from Resoltech, from now on hardener), and a fireproof additive based on ammonium polyphosphate (Exolit IFR 36^{®} from Clariant, from now on APP) as the commercial flame retardant of reference.

The preparation of the flame-resistant bio-epoxy resin formulations was carried out in a Dispermat mixer TML-VMA model, where the components of the formulation were dispersed for 1 h at 500 rpm in the bio-epoxy resin prior to curing.

With the objective of demonstrating the improvement of the fire behaviour of the bio-epoxy resin by incorporating the polyelectrolyte complex comprised in the invention, alone or in synergistic combination with APP, the formulations shown in Table 4 were prepared. The proportions shown in Table 4 relate to parts per hundred of resin (or phr).

**Table 4: Bio-epoxy resin formulations with and without flame retardants.**

| Reference | APP (phr) | PEC (phr) | Hardener (phr) |
|---|---|---|---|
| Bio-epoxy Ref | - | - | 26 |
| Bio-epoxy/60APP | 60 | - | 26 |
| Bio-epoxy/60PEC (conventional synthesis) | - | 60 | 26 |
| Bio-epoxy/40APP/20PEC (conventional synthesis) | 40 | 20 | 26 |
| Bio-epoxy/40APP/20PEC (by mechanochemistry) | 40 | 20 | 26 |
| Bio-epoxy/40APP/20PEC (by mechanochemistry) | 40 | 20 | 26 |

The formulations prepared in the Dispermat mixer were poured in duplicate into a mould with dimensions of 100x100x2 mm, and they were placed in an oven at 40 °C for 8 h to facilitate the curing of the resin. Once the curing time is over, the specimens were removed from the mould and subjected to cone calorimetry assays.

The cone calorimetry assay was carried out according to the ISO 5660-1:2015 standard, to study the fire behaviour of materials with the aim of guaranteeing safety against possible fires. According to the indicated standard, the most relevant parameters obtained in the cone calorimetric assay are:
- Time to ignition (hereinafter TTI), which is the time (in seconds) that elapses between the appearance of the flame and the production of the first spark.
- Heat release rate (hereinafter HRR), which offers information on the amount of heat released per unit of time and area and turns out to be one of the most relevant parameters in terms of evaluating the material's response to fire. It is expressed in units of kW/m². The reference parameter being the maximum peak heat release rate (pHRR), which is recorded when the breakdown process of the assayed material reaches its maximum speed. This peak value is considered a reliable measure for determining the flammability of a material (Mouritz, A. P.-6
   - Durability of composites exposed to elevated temperature and fire. In Durability of Composites for Civil Structural Applications; Karbhari, V. M., Ed.; Woo-head Publishing, 2007; pp 98-125). The lower its value, the lower the maximum heat release achieved, which turns out to be beneficial in reducing flame propagation.
- Total heat released (hereinafter THR), which relates to the total heat released per unit area the units of which are kJ/m².

The specimens obtained were conditioned at 23 ± 2 °C temperature and at 50 ± 5 % humidity, and the assay conditions were the following:
- Radiation power applied on the surface of the specimen: 25 kW/m² or 50 kW/m².
- Distance of 60mm between the surface of the specimen and the lower edge of the radiating cone.
- Sample placed in a retention frame the assayed surface of which was 0.00884 m².

The fire behaviour results of the specimens obtained are shown in Table 5:

**Table 5: Relevant parameters obtained during the cone calorimetric assay.**

| Reference | TTI (s) | pHRR (kW/m²) | THR (kJ/m²) | Assay conditions |
|---|---|---|---|---|
| Bio-epoxy Ref | 186 | 1020 | 166 | 25 kW/m² and 60 mm |
| Bio-epoxy/60APP | 146 ± 11 | 165 ± 7 | 27 ± 2 | |
| Bio-epoxy/60PEC (conventional synthesis) | 218 | 620 | 94 | |
| Bio-epoxy/40APP/20PEC (conventional synthesis) | 167 ± 7 | 105 ± 2 | 13 ± 2 | |
| Bio-epoxy/40APP/20PEC (by mechanochemistry) | Very low flame production. No values could be obtained during the assay. | | | |
| Bio-epoxy/40APP/20PEC (by mechanochemistry) | 48 | 83 ± 3 | 48 ± 6 | 50 kW/m² and 60 mm |

According to the results shown in table 4, the addition of the PEC obtained by conventional synthesis has a significant effect on the TTI values obtained, causing a delay of half a minute in the appearance of the flames compared to the bio-epoxy resin without flame retardant, and more than one minute compared to the bio-epoxy resin system with APP in the same proportion.

In the formulations where the commercial flame retardant and the PEC obtained through conventional synthesis are combined, an additional delay in ignition is observed with respect to the bio-epoxy resin containing exclusively the commercial fireproof material. In other words, these materials have greater resistance to ignition since higher TTI values are obtained. Therefore, the Bio-epoxy/40APP/20PEC formulation turns out to be a promising material in terms of fire resistance.

Nevertheless, when comparing the same formulation using the polyelectrolyte complex of the present invention, the flame production is so low that the equipment cannot record the relevant assay parameters, which indicates exceptional fire resistance compared to the previously mentioned formulations.

With the objective of obtaining the reference parameter values in the cone calorimetric assay, it was decided to double the energy contribution to the system (50 kW/m²) for the formulation comprising the polyelectrolyte complex of the present invention. Under these most unfavourable conditions, the formulation that combines the PEC obtained by mechanochemistry and the APP, referred to in table 4 as "Bio-epoxy/40APP/20PEC (by mechanochemistry)", presents a reduction in ignition time of 70% (48 s compared to 167 s) compared to the similar formulation containing the PEC obtained by conventional synthesis). Furthermore, the heat generated is reduced by 90% compared to bio-epoxy resin without any flame retardant, and improves by up to 50% compared to the formulation containing only APP as a flame retardant.

In view of table 5 above, the polyelectrolyte complex of the invention (PEC) can be combined with other conventional or known retardants such as APP, producing a synergistic effect by reducing the APP content in the composition.

## Claims

1. A polyelectrolyte complex **characterised in that** it comprises:
• chitosan, consisting of N-acetyl-D-glucosamine and β-(1-4)-D-glucosamine monomers,
• phytic acid or a derived salt thereof,
• water in an amount between 5% and 15% by weight, wherein:
chitosan and phytic acid are bound by means of electrostatic forces,
said polyelectrolyte complex has a molar ratio between the β-(1-4)-D-glucosamine monomer and phytic acid, or a derived salt thereof, between 4:1 and 6.5:1,
a percentage by weight of phosphorus of between 8 and 15% and
said polyelectrolyte complex is a powdery solid.

2. The polyelectrolyte complex, according to claim 1, **characterised in that** it has a P:N molar ratio between 1:1 and 3:1, wherein P:N represents the molar ratio between the phosphorus atoms from phytic acid, or a derived salt thereof, and the nitrogen atoms from the monomeric unit of β-(1-4)-D-glucosamine

3. The polyelectrolyte complex, according to claim 1 or 2, wherein said complex presents a molar ratio between the β-(1-4)-D-glucosamine monomer of chitosan and the phytic acid or a salt derived thereof of 6:1.

4. The polyelectrolyte complex, according to any of the preceding claims, wherein said complex has a percentage by weight of phosphorus of 13%.

5. The polyelectrolyte complex, according to any of the preceding claims, wherein said complex has a P:N molar ratio of 1.5:1, wherein P:N is the molar ratio between phosphorus atoms from phytic acid, or a derived salt thereof, and the nitrogen atoms from the monomeric unit of β-(1-4)-D-glucosamine.

6. The polyelectrolyte complex, according to any of the preceding claims where the molecular weight of chitosan is between 90 and 150 KDa and/or has a degree of deacetylation of between 50-99%.

7. A method for the preparation of the polyelectrolyte complex defined in any of claims 1 to 6 **characterised in that** it comprises or consists of the following steps:
a) introducing chitosan powder into a twin-screw extruder at temperatures between 25 °C and 120 °C, maintaining a screw rotation speed between 50 rpm and 500 rpm and
b) adding an aqueous solution of phytic acid, or a salt thereof, having a concentration of phytic acid between 25% and 70% by weight, after the introduction of chitosan, using a liquid injection device, where it is mixed and reacted with chitosan along the length of the extruder, maintaining the same temperature and speed mentioned in section a), during a residence time of between 30 and 120 s, the polyelectrolyte complex formed as a powdery solid being collected at the outlet of the extruder.

8. The method, according to claim 7, wherein the rotation speed used is between 75 and 250 rpm, preferably 150 rpm.

9. The method, according to any of claims 7 to 8 wherein the temperature indicated in step a) is 100 °C and/or wherein the total amount fed to the extruder is between: of chitosan and phytic acid solution, is between 1 and 15kg/h.

10. The method, according to any of claims 7 to 9 wherein the chitosan used has a molecular weight between 90 and 150 KDa and/or a degree of deacetylation of between 50-99%.

11. The method, according to any of claims 7 to 10 wherein the molar ratio used between the β-(1-4)-D-glucosamine monomer and the phytic acid or a salt derived thereof is between 4:1 and 6.5:1.

12. Use of the polyelectrolyte complex defined in any of claims 1 to 6 as a bio-fireproof, antimicrobial and/or antioxidant additive in polymeric compositions, wherein preferably the polymeric compositions are epoxy resins.

13. The use, according to claim 12 wherein the polyelectrolyte complex is used in the composition in a proportion between 1 and 5% by weight for use as an antibacterial or antioxidant or wherein the polyelectrolyte complex is used in the composition in a proportion between 10 and 33% by weight as a fireproof additive.

14. The use, according to claim 12 to 13 wherein the polyelectrolyte complex is used as a flame retardant additive in a composition together with ammonium polyphosphate, the proportion by weight of the polyelectrolyte complex plus that of the ammonium polyphosphate being in this case between 10 and 33% and wherein preferably the weight ratio between the ammonium polyphosphate and the polyelectrolyte complex is between 0.5:1-5:1.

15. An article made of a polymeric material comprising the polyelectrolyte complex defined in any of claims 1 to 6, either in the form of a coating or embedded in the same article in a proportion between 1 and 33% by weight and wherein, preferably, the polymeric material is an epoxy resin.

## Patentansprüche

1. Polyelektrolytkomplex, **dadurch gekennzeichnet, dass** er Folgendes umfasst:
• Chitosan, bestehend aus N-Acetyl-D-glucosamin- und β-(1-4)-D-glucosamin-Monomeren,
• Phytinsäure oder ein davon abgeleitetes Salz,
• Wasser in einer Menge zwischen 5 Gew.-% und 15 Gew.-%, wobei:
Chitosan und Phytinsäure mittels elektrostatischer Kräfte gebunden sind,
wobei der Polyelektrolytkomplex ein Molverhältnis zwischen dem β-(1-4)-D-Glucosamin-Monomer und Phytinsäure oder einem davon abgeleiteten Salz zwischen 4:1 und 6,5:1 aufweist,
einen Gewichtsprozentsatz an Phosphor zwischen 8 und 15 % aufweist und der Polyelektrolytkomplex ein pulverförmiger Feststoff ist.

2. Polyelektrolytkomplex gemäß Anspruch 1, **dadurch gekennzeichnet, dass** er ein P:N-Molverhältnis zwischen 1:1 und 3:1 aufweist, wobei P:N das Molverhältnis zwischen den Phosphoratomen aus Phytinsäure oder einem davon abgeleiteten Salz und den Stickstoffatomen aus der Monomereinheit von β-(1-4)-D-Glucosamin darstellt.

3. Polyelektrolytkomplex gemäß Anspruch 1 oder 2, wobei der Komplex ein Molverhältnis zwischen dem β-(1-4)-D-Glucosamin-Monomer von Chitosan und der Phytinsäure oder einem davon abgeleiteten Salz von 6:1 aufweist.

4. Polyelektrolytkomplex gemäß einem der vorhergehenden Ansprüche, wobei der Komplex einen Gewichtsanteil an Phosphor von 13 % aufweist.

5. Polyelektrolytkomplex gemäß einem der vorhergehenden Ansprüche, wobei der Komplex ein P:N-Molverhältnis von 1,5:1 aufweist, wobei P:N das Molverhältnis zwischen Phosphoratomen aus Phytinsäure oder einem davon abgeleiteten Salz und den Stickstoffatomen aus der Monomereinheit von β-(1-4)-D-Glucosamin ist.

6. Polyelektrolytkomplex gemäß einem der vorhergehenden Ansprüche, wobei das Molekulargewicht von Chitosan zwischen 90 und 150 kDa liegt und/oder einen Deacetylierungsgrad zwischen 50 und 99 % aufweist.

7. Verfahren zur Herstellung des in einem der Ansprüche 1 bis 6 definierten Polyelektrolytkomplexes, **dadurch gekennzeichnet, dass** es die folgenden Schritte umfasst oder aus diesen besteht:
a) Einführen von Chitosanpulver in einen Doppelschneckenextruder bei Temperaturen zwischen 25 °C und 120 °C, wobei eine Schneckendrehzahl zwischen 50 U/min und 500 U/min beibehalten wird, und
b) Zugeben einer wässrigen Lösung von Phytinsäure oder eines Salzes davon mit einer Konzentration an Phytinsäure zwischen 25 Gew.-% und 70 Gew.-% nach dem Einführen von Chitosan unter Verwendung einer Flüssigkeitsinjektionsvorrichtung, wobei sie mit Chitosan entlang der Länge des Extruders gemischt und umgesetzt wird, wobei die gleiche Temperatur und Geschwindigkeit wie in Abschnitt a) erwähnt beibehalten wird, während einer Verweilzeit zwischen 30 und 120 s, wobei der als pulverförmiger Feststoff gebildete Polyelektrolytkomplex an dem Auslass des Extruders gesammelt wird.

8. Verfahren gemäß Anspruch 7, wobei die verwendete Drehzahl zwischen 75 und 250 U/min, vorzugsweise 150 U/min, liegt.

9. Verfahren gemäß einem der Ansprüche 7 bis 8, wobei die in Schritt a) angegebene Temperatur 100 °C beträgt und/oder wobei die dem Extruder zugeführte Gesamtmenge an Chitosan und Phytinsäurelösung zwischen 1 und 15 kg/h liegt.

10. Verfahren gemäß einem der Ansprüche 7 bis 9, wobei das verwendete Chitosan ein Molekulargewicht zwischen 90 und 150 kDa und/oder einen Deacetylierungsgrad zwischen 50 und 99 % aufweist.

11. Verfahren gemäß einem der Ansprüche 7 bis 10, wobei das verwendete Molverhältnis zwischen dem β-(1-4)-D-Glucosamin-Monomer und der Phytinsäure oder einem davon abgeleiteten Salz zwischen 4:1 und 6,5:1 liegt.

12. Verwendung des Polyelektrolytkomplexes gemäß einem der Ansprüche 1 bis 6 als bio-feuerfestes, antimikrobielles und/oder antioxidatives Additiv in polymeren Zusammensetzungen, wobei die polymeren Zusammensetzungen vorzugsweise Epoxidharze sind.

13. Verwendung gemäß Anspruch 12, wobei der Polyelektrolytkomplex in der Zusammensetzung in einem Anteil zwischen 1 und 5 Gew.-% zur Verwendung als antibakterielles Mittel oder Antioxidans verwendet wird oder wobei der Polyelektrolytkomplex in der Zusammensetzung in einem Anteil zwischen 10 und 33 Gew.-% als feuerfestes Additiv verwendet wird.

14. Verwendung gemäß Anspruch 12 bis 13, wobei der Polyelektrolytkomplex als flammhemmendes Additiv in einer Zusammensetzung zusammen mit Ammoniumpolyphosphat verwendet wird, wobei der Gewichtsanteil des Polyelektrolytkomplexes plus dem des Ammoniumpolyphosphats in diesem Fall zwischen 10 und 33 % liegt und wobei vorzugsweise das Gewichtsverhältnis zwischen dem Ammoniumpolyphosphat und dem Polyelektrolytkomplex zwischen 0,5:1 und 5:1 liegt.

15. Gegenstand aus einem Polymermaterial, umfassend den Polyelektrolytkomplex gemäß einem der Ansprüche 1 bis 6, entweder in Form einer Beschichtung oder eingebettet in denselben Gegenstand in einem Anteil zwischen 1 und 33 Gew.-%, wobei das Polymermaterial vorzugsweise ein Epoxidharz ist.

## Revendications

1. Complexe polyélectrolytique **caractérisé en ce qu'**il comprend :
• du chitosane, constitué de monomères N-acétyl-D-glucosamine et β-(1-4)-D-glucosamine,
• de l'acide phytique ou un sel dérivé de celui-ci,
• de l'eau dans une quantité comprise entre 5 % et 15 % en poids, dans lequel :
le chitosane et l'acide phytique sont liés au moyen de forces électrostatiques, ledit complexe polyélectrolytique présente un rapport molaire entre le monomère β-(1-4)-D-glucosamine et l'acide phytique, ou un sel dérivé de celui-ci, compris entre 4:1 et 6,5:1,
un pourcentage en poids de phosphore compris entre 8 et 15 % et ledit complexe polyélectrolytique est un solide pulvérulent.

2. Complexe polyélectrolytique, selon la revendication 1, **caractérisé en ce qu'**il présente un rapport molaire P:N compris entre 1:1 et 3:1, dans lequel P:N représente le rapport molaire entre les atomes de phosphore provenant de l'acide phytique, ou d'un sel dérivé de celui-ci, et les atomes d'azote provenant de l'unité monomère de β-(1-4)-D-glucosamine.

3. Complexe polyélectrolytique, selon la revendication 1 ou 2, dans lequel ledit complexe présente un rapport molaire entre le monomère β-(1-4)-D-glucosamine du chitosane et l'acide phytique ou un sel dérivé de celui-ci de 6:1.

4. Complexe polyélectrolytique, selon l'une quelconque des revendications précédentes, dans lequel ledit complexe présente un pourcentage en poids de phosphore de 13 %.

5. Complexe polyélectrolytique, selon l'une quelconque des revendications précédentes, dans lequel ledit complexe présente un rapport molaire P:N de 1,5:1, dans lequel P:N est le rapport molaire entre les atomes de phosphore provenant de l'acide phytique, ou d'un sel dérivé de celui-ci, et les atomes d'azote de l'unité monomère de β-(1-4)-D-glucosamine.

6. Complexe polyélectrolytique, selon l'une quelconque des revendications précédentes où le poids moléculaire du chitosane est compris entre 90 et 150 kDa et/ou présente un degré de désacétylation compris entre 50 et 99 %.

7. Procédé pour la préparation du complexe polyélectrolytique défini dans l'une quelconque des revendications 1 à 6, **caractérisé en ce qu'**il comprend les étapes suivantes ou en est constitué :
a) introduire de la poudre de chitosane dans une extrudeuse à vis jumelles à des températures comprises entre 25 °C et 120 °C, en maintenant une vitesse de rotation des vis comprise entre 50 tr/min et 500 tr/min et
b) ajouter une solution aqueuse d'acide phytique, ou d'un sel de celui-ci, présentant une concentration en acide phytique comprise entre 25 % et 70 % en poids, après l'introduction du chitosane, à l'aide d'un dispositif d'injection de liquide, où elle est mélangée et mise en réaction avec le chitosane sur toute la longueur de l'extrudeuse, en maintenant la même température et la même vitesse que celles mentionnées à la section a), pendant un temps de séjour compris entre 30 et 120 s, le complexe polyélectrolytique formé en tant que solide pulvérulent étant recueilli à la sortie de l'extrudeuse.

8. Procédé selon la revendication 7, dans lequel la vitesse de rotation utilisée est comprise entre 75 et 250 tr/min, de préférence 150 tr/min.

9. Procédé selon l'une quelconque des revendications 7 à 8, dans lequel la température indiquée à l'étape a) est de 100 °C et/ou dans lequel la quantité totale introduite dans l'extrudeuse est comprise entre : de chitosane et de solution d'acide phytique, est comprise entre 1 et 15 kg/h.

10. Procédé, selon l'une quelconque des revendications 7 à 9, dans lequel le chitosane utilisé présente un poids moléculaire compris entre 90 et 150 kDa et/ou un degré de désacétylation compris entre 50 et 99 %.

11. Procédé, selon l'une quelconque des revendications 7 à 10, dans lequel le rapport molaire utilisé entre le monomère β-(1-4)-D-glucosamine et l'acide phytique ou un sel dérivé de celui-ci est compris entre 4:1 et 6,5:1.

12. Utilisation du complexe polyélectrolytique défini dans l'une quelconque des revendications 1 à 6 en tant qu'additif bio-ignifuge, antimicrobien et/ou antioxydant dans des compositions polymères, dans laquelle, de préférence, les compositions polymères sont des résines époxy.

13. Utilisation, selon la revendication 12, dans laquelle le complexe polyélectrolytique est utilisé dans la composition en une proportion comprise entre 1 et 5 % en poids pour une utilisation en tant qu'antibactérien ou antioxydant ou dans laquelle le complexe polyélectrolytique est utilisé dans la composition en une proportion comprise entre 10 et 33 % en poids en tant qu'additif ignifuge.

14. Utilisation, selon les revendications 12 à 13, dans laquelle le complexe polyélectrolytique est utilisé en tant qu'additif retardateur de flamme dans une composition conjointement avec du polyphosphate d'ammonium, la proportion en poids du complexe polyélectrolytique plus celle du polyphosphate d'ammonium étant dans ce cas comprise entre 10 et 33 % et dans laquelle, de préférence, le rapport pondéral entre le polyphosphate d'ammonium et le complexe polyélectrolytique est compris entre 0,5:1 et 5:1.

15. Article composé d'un matériau polymère comprenant le complexe polyélectrolytique défini dans l'une quelconque des revendications 1 à 6, soit sous la forme d'un revêtement, soit incorporé dans le même article en une proportion comprise entre 1 et 33 % en poids et dans lequel, de préférence, le matériau polymère est une résine époxy.
